Europäisches Patentamt

**European Patent Office**

**Office européen des brevets**

(11) Publication number: **0 206 612**
A2

(12) # EUROPEAN PATENT APPLICATION

(21) Application number: **86304381.6**

(22) Date of filing: **09.06.86**

(51) Int. Cl.⁴: **B 23 B 31/04**

(30) Priority: **11.06.85 GB 8514693**

(43) Date of publication of application: **30.12.86**
**Bulletin 86/52**

(84) Designated Contracting States: **BE DE FR GB IT SE**

(71) Applicant: **KENNAMETAL ERICKSON U.K. LIMITED, Tower Road North, Warmley Bristol BS15 2XF (GB)**

(72) Inventor: **Parry, Reginald Sidney, c/o Kennametal Erickson Limited Tower Road North, Warmley Bristol BS15 2XF (GB)**

(74) Representative: **Kirby, Harold Douglas Benson et al, G.F. Redfern & Company Marlborough Lodge 14 Farncombe Road, Worthing West Sussex BN11 2BT (GB)**

(54) **Tool-holder adaptor.**

(57) There is described a tool member (5, 105) and adaptor (1, 101) for automated tool changing in spindle machines, wherein the adaptor (1, 101) has an external sleeve (19, 119) slidable on a spindle member (3, 103) to selectively engage and release a plurality of gripping elements (33, 133) which retain the tool member (5, 105) in the adaptor. The tool member includes a conical surface (35, 135) contacted by the gripping elements to urge the tool member into the adaptor when the gripping elements are engaged. The sleeve (19, 119) and tool member (5, 105) have grooves (41, 141, 47, 147) for automated handling.

0206612

"TOOL-HOLDER ADAPTOR"

This invention relates to an adaptor for connecting tool-holders to rotating spindle machines whereby the tool-change of cutting tools and tool-holder may be achieved using robot facilities. The invention particularly relates to the category of machines using multi-spindle heads whereby it is possible to effect a tool-change without manual intervention. These machines are of the transfer line type, having a multitude of work spindles capable of performing drilling, reaming and tapping operations principally. However, it is often necessary to change one or more of the tools either for the purposes of replacing the tool because it is blunt or for changing the purpose of the tool, for instance reaming or tapping following drilling.

Hitherto this type of machine has been fitted with tool-holders that are fixed to the spindles and which require manual intervention to change tools. This is of course a time-consuming exercise. It is an object of this invention therefore to provide a means whereby tools or tool-holders may be changed by robotic facilities.

In accordance with this invention an adaptor for a rotary machine comprises a spindle member for attachment to or forming a part of said spindle of the machine and a tool member, the spindle member having an axially slidable sleeve around it which has an annular inclined surface to act, on axial movement of the sleeve, on one or more gripping elements extending through apertures in the side of the spindle member into a bore thereof, which bore is adapted to receive the tool member, the gripping elements being arranged to act on a frusto-conical surface of the tool member so as to draw the tool member into the spindle member.

Thus merely by axially moving the slidable sleeve it is possible to free or grip the tool member in the spindle member.

Preferably the slidable sleeve is resiliently biassed towards a position in which it grips the tool member.

Preferably spring means is provided to eject the tool member from the spindle member once the tool member has been released by the gripping elements. The spring means may include a piston which, having ejected the tool member, adopts a position in the bore of the spindle member in which it prevents the gripping means from being displaced inwardly by the sleeve and therefore prevents the sleeve from returning to its previous gripping position.

In a further advantageous embodiment, the piston may act not on the gripping means but on a separate locking means to retain the sleeve in its axially displaced position when the piston has ejected the tool member. Two embodiments of the invention will now be described in detail, with reference to the accompanying drawings, in which:

Figure 1 is a longitudinal sectional view of a first adaptor, with a tool-holder inserted therein;

Figure 2 is a side view of a tool-holder for use with a second adaptor shown in Figures 3 to 6;

Figure 3 shows a second adaptor to an enlarged scale, with the tool-holder locked therein;

Figure 4 shows the first step in disengaging the tool-holder from the adaptor;

Figure 5 shows the tool-holder freed from the adaptor; and

Figure 6 shows the extreme limit of travel of the slidable sleeve of the tool-holder.

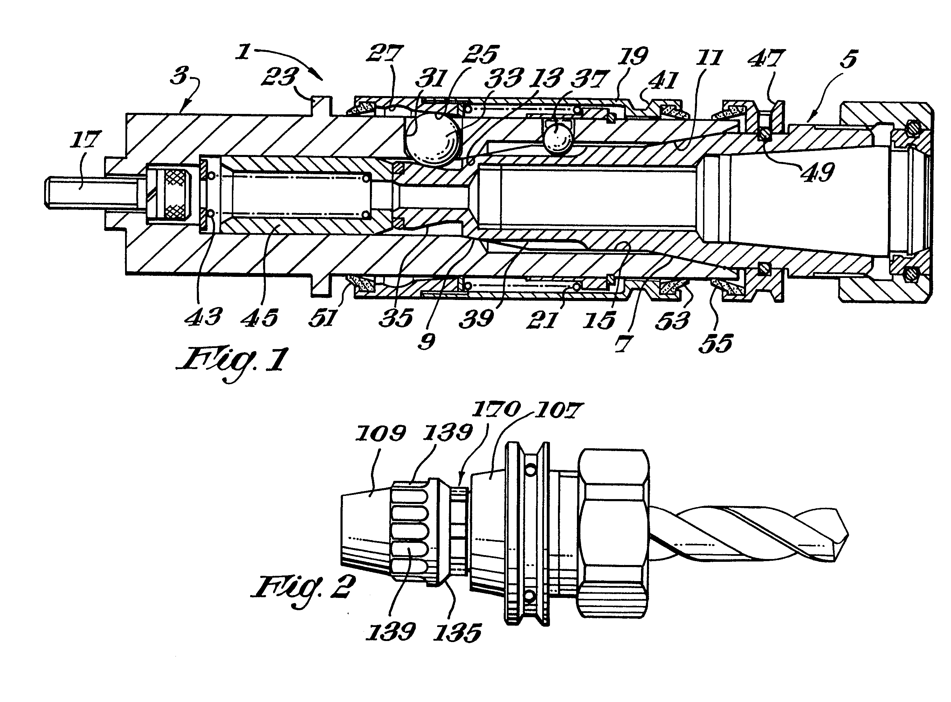

Referring now to the drawings, Figure 1 shows an adaptor 1 which comprises a spindle member 3 and a tool member 5. The tool member may be in the form of a chuck or collet to grip a tool as shown in the drawing or indeed it may in fact be the tool itself. In either event the tool member 5 has two conical surfaces 7 and 9 which are adapted to co-operate with corresponding conical surfaces 11 and 13 formed in a bore 15 of the spindle member 3 when the tool member 5 is inserted into the spindle member 3 as shown in the drawing, the interengaging surfaces 9, 13 and 7, 11 ensure that the tool member 5 is concentric with the spindle member 3.

The spindle member 3 is itself connectible to a spindle of a rotary machine not shown. Alternatively the spindle member 3 may be integral with the spindle of the machine. In the drawing however it is shown as a separate element connectible to the spindle of the machine by set screw 17.

- 4 -

A sleeve 19 is disposed on, and surrounds, the spindle member 3 and is urged axially by a spring 21 towards a flange 23 formed on the spindle member 3. The sleeve 19 is provided with a coned surface 25 and a circular groove 27. A number of apertures 31 disposed equally around the circumference of the spindle member 3, house gripping elements 33 which in the present instance are in the form of balls. The balls 33 are acted upon by the conical surface 25 of the sleeve 19 and urged radially inwardly by the spring means 21. When the tool member 5 is positioned in the spindle member 3 as shown in the drawings the gripping elements 33 act on a conical surface 35 formed on the tool member 5. The surface 35 is inclined such that the radially inward pressure of the gripping elements or balls 33 tends to draw the tool member 5 into the spindle member 3.

A plurality of balls 37, pins or even splines (neither of the latter being shown) disposed in the bore 15 of the spindle member 3 transmit the torque from the spindle member to the tool member 5 via grooves 39 in the tool member 5 and with which the balls 37 co-operate.

The sleeve 19 is provided with a groove 41 facilitating the gripping thereof by an automatically controlled means. Thus when it is desired to change the tool member 5 the groove 41 is gripped by said automatic means and the sleeve 19 is drawn to the right in the drawing. At the base of the bore 15 there is disposed a spring 43 which acts upon a piston 45. The piston 45 is arranged so as to eject the tool member 5 when it is released by the gripping elements

- 5 -

33. Thus when the sleeve 19 is moved to the right the piston 45 pushes the tool member 5 out of the spindle member 3 and in so doing positions itself underneath the balls 33 thereby preventing them from returning towards their gripping position once the tool member 5 has been withdrawn. Because the gripping elements 33 cannot return inwards, the sleeve 19 cannot return to the gripping position shown in the drawings. Thus when the tool member is not positioned in the spindle member 3, the sleeve 19 is located by the balls 33 co-operating with the circular groove 27.

Replacement of the tool member 5 or another one is merely a reversal of the removal procedure. The tool member 5 is also provided with automatic handling facilities by the provision of a grooved ring 47 thereof. The ring 47 and the tool member 5 are each provided with a circumferential groove in which balls 49 are located enabling the ring to rotate around the tool member 5. This allows the tool member 5 to rotate about its axis slightly as may be necessary when it is being gripped via the gripping ring 47 and being inserted into the spindle member 3. Such rotation may be necessary to align the grooves 39 with the balls 37, and that such rotation will be brought about by the fact that the bottoms of the grooves 39 are radiused to engage the balls 37 when the tool member 5 is inserted.

While a ball is illustrated as the gripping elements 33, it should be appreciated that another element could be employed such as a pin.

The sleeve 19 is provided at its ends with seals 51, 53 to prevent the ingress of dirt. Similarly the ring 47 is provided with a seal 55.

Referring now to Figures 2.to 6, the second embodiment of the adaptor 101 comprises a spindle member 103 and a tool-holder 105, the tool-holder 105 having axially spaced conical surfaces 107, 109 which co-operate with corresponding conical surfaces 111 and 113 formed in a bore 115 of the spindle member 103, the interengaging surfaces 109, 113 and 107, 111 ensuring that the tool-holder 105 is concentric with the spindle member 103.

The spindle member 103 is itself connectible to a spindle of a rotary machine (not shown), as previously described.

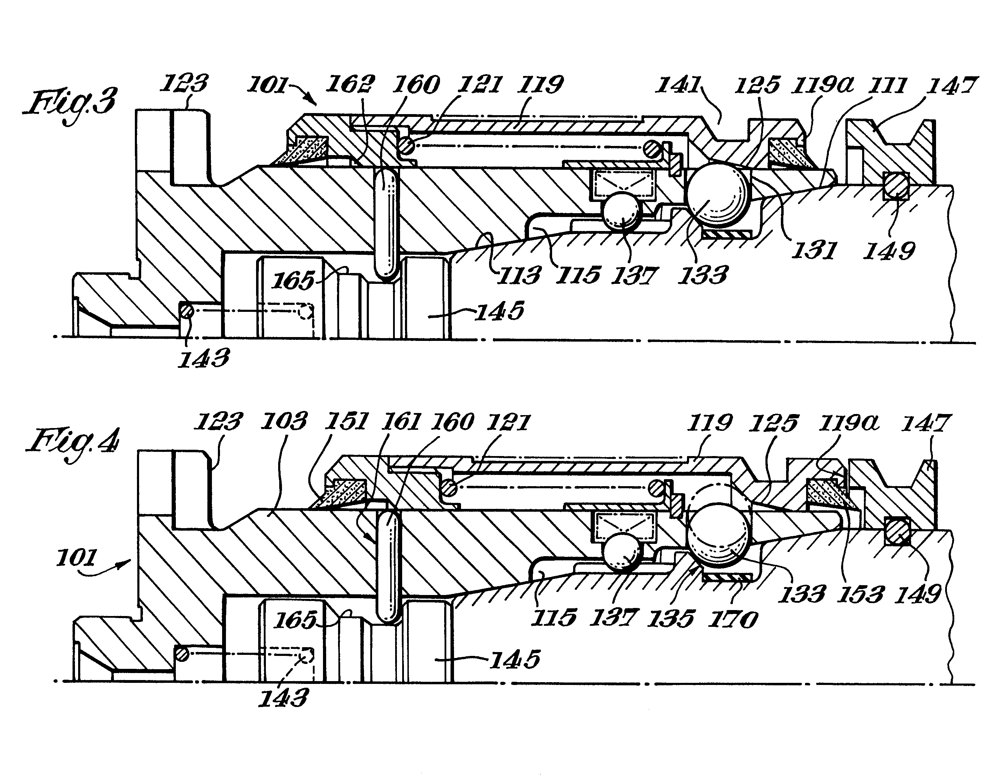

A sleeve 119 is disposed on, and surrounds, the spindle member 103 and is urged axially by a spring 121 towards a flange 123 formed on the spindle member 103. The sleeve 119 is provided with an internal coned surface 125. A number of apertures 131 disposed equally around the circumference of the spindle member 103, house gripping elements 133 which as in the previous embodiment are in the form of balls. The balls 133 are acted upon by the conical surface 125 of the sleeve 119 and urged radially inwardly as the sleeve is urged axially by the spring means 21. When the tool-holder 105 is positioned in the spindle member 103 as shown in Figure 3 the gripping elements 133 act on a conical surface 135 formed on the tool-holder 105. The surface 135 is inclined such that the radially inward pressure of the gripping elements or balls 133 tends to draw the tool-holder 105 into the spindle member 103. The tool-holder 105 may also be provided with a circumferential bar code label, as at 170, for automated tool identification.

A plurality of balls 137, mounted in the spindle member 103 to extend into the bore 115 of the spindle member 103 transmit the torque fromm the spindle member 103 to the tool-holder 105 via grooves 139, in the same way as in the previous embodiment. As previously mentioned, splines or pins may replace the balls 137.

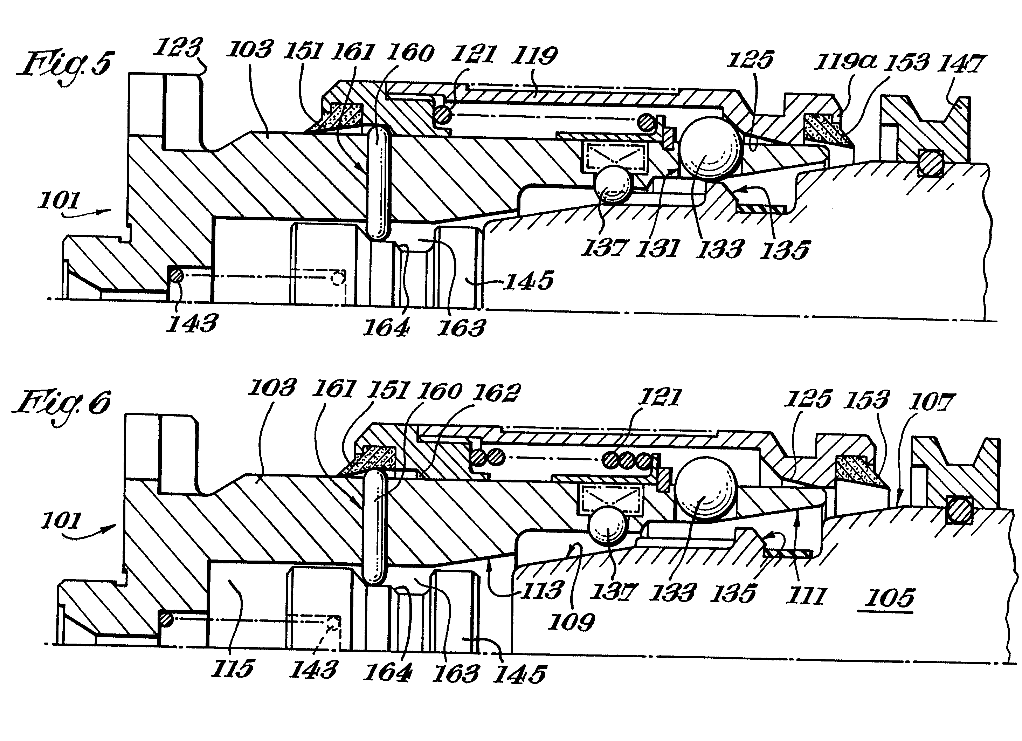

The sleeve 119 is provided with a groove 141, corresponding in purpose with groove 41 of the first embodiment. Thus when it is desired to change the tool-holder 105 the groove 141 is gripped and the sleeve 119 is drawn to the right, as seen in Figure 4. At the base of the bore 115 there is disposed a spring 143 which acts upon a piston 145. The piston 145 is arranged so as to eject the tool-holder 105 when it is released by the gripping elements 133. Thus when the sleeve 119 is moved to the right, the piston 145 pushes the tool-holder 105 out of the spindle member 103, as seen in Figure 5. If, however, the piston is unable to break the engagement of the conical alignment surfaces, then the sleeve will move into the position shown in Figure 4. In this position, the gripping elements are released and the sleeve end 119a contacts a ring 147 on the tool-holder, to apply a releasing force directly thereto.

A radially movable pin 160 is positioned in a bore 161 in the spindle member 103 and extends radially inwardly into a circumferential groove 163 formed in the piston 145 when the tool-holder 105 is fully inserted into the spindle member 103. A ramp surface 164 will engage the end of the pin to urge it outwardly as the piston 145 moves to the right, and further movement brings a land portion 165 into alignment with the pin 160 to retain it in its radially outwardly displaced position.

When the pin 160 is urged outwards by the ramp surface 164 of piston 145 as it ejects the tool-holder 105, the radially outer end of the pin projects from the spindle member 103, to engage a conical surface 162 of the sleeve 119, preventing its return to the gripping position shown in Figure 3. Thus when no tool-holder is positioned in the spindle member 103, the sleeve 119 is held by the pin 160 co-operating with the conical surface 162, the pin 160 being held in position by contacting the land 165.

Replacement or substitution of the tool-holder 105 is merely a reversal of the removal procedure. The tool-holder 105 is also provided with automatic handling facilities by the provision of a grooved ring 147 thereof. The ring 147 and the tool-holder 105 are each provided with a circumferential groove in which balls 149 are located enabling the ring to rotate around the tool-holder 105. This allows the tool-holder 105 to rotate about its axis slightly during insertion into the spindle member 103, as previously described.

As a tool-holder is inserted into the spindle member 103, the end face of the tool-holder will contact the piston 145 and urge it leftwards as seen in the drawings, against the spring 143. When the tool-holder has been inserted sufficiently for its conical surfaces 107 and 109 to mate with the conical surfaces 111 and 113 of the spindle member, then the radially inner end of the pin 160 is opposite the circumferential groove 163 in the piston 145. The conical surface 162 then forces the pin 160 inwardly and the sleeve moves to the left, urged by spring 121, and the gripping elements 133 engage the tool-holder 105 to retain it in the spindle member. It should be noted that the gripping elements engage after the aligning surfaces have mated, and thus engagement of the gripping elements cannot interfere with the alignment of the tool.

Seals 151, 153 are provided to prevent the ingress of dirt into the mechanism.

0206612

- 10 -

CLAIMS

1. An adaptor for a rotary spindle machine and a tool member therefor, the spindle member having an external sleeve axially slidable between first and second positions and resiliently biassed toward its first position, and the sleeve having an internal conical surface positioned to co-operate with a number of gripping elements mounted for radial movement in apertures extending from the outside of the spindle member to an axial bore thereof, the gripping elements being urged from a radially outward, retracted position to a radially inward, extended position by movement of the sleeve from its second to its first position, and the gripping elements being co-operable with a conical surface of the tool member to urge the tool member into the spindle member when the gripping elements are urged radially inwardly by the sleeve.

2. An adaptor and tool member according to Claim 1, wherein the tool member and the spindle member are formed with mating conical alignment surfaces.

3. An adaptor and tool member according to Claim 2, wherein the alignment surfaces comprise two spaced co-axial conical surfaces on each of the adaptor and the tool member.

4. An adaptor and tool member according to Claim 3, wherein the gripping elements and their co-operating conical surface are positioned between the alignment surfaces of the adaptor and tool member respectively.

0206612

- 11 -

5. An adaptor and tool member as claimed in Claim 1, wherein torque transmitting elements extend into the axial bore of the adaptor and are engageable with a corresponding torque transmitting section of the tool member.

6. An adaptor and tool member according to Claim 5, wherein the torque transmitting elements are balls hosued in radial bores of the adaptor, and the torque transmitting section of the tool member comprises axially extending peripheral flutes.

7. An adaptor and tool member according to Claim 3 and 5, wherein the torque transmitting elements and the torque transmitting section are positioned between the respective alignment surfaces of the adaptor and tool member respectively.

8. An adaptor and tool member according to any preceding Claim, wherein the adaptor includes ejector means to engage the tool member to urge the tool member out of the adaptor.

9. An adaptor and tool member according to Claim 8, wherein the ejector means comprises a piston mounted in the bore of the adaptor and urged axially by a spring.

10. An adaptor and tool member according to Claim 9, wherein the piston occupies a first position when the tool member is in the adaptor and a second position when the tool member is removed from the adaptor, and the piston in its second position acting to prevent movement of the sleeve from its second position to its first position.

11. An adaptor and tool member according to Claim 10, wherein the piston in its second position prevents radially inward movement of the gripping elements from their retracted position.

12. An adaptor and tool member according to Claim 10, wherein radially reciprocating locking means is provided to retain the sleeve in its second position when the piston is in its second position.

13. An adaptor and tool member according to Claim 12, wherein the radially reciprocating locking means comprises a pin movable in a radial passage in the spindle element.

14. An adaptor and tool member according to any preceding Claim, in which an end surface of the sleeve is engageable with an abutment on the tool member to urge the tool member from the adaptor, the sleeve engaging the abutment by moving from its first position to its second position and continuing the movement in that direction.

15. An adaptor and tool member as claimed in Claim 14 in which the abutment is an annular ring.

16. An adaptor and tool member as claimed in any preceding Claim, wherein the tool member includes an identification code in machine-readable form.

17. An adaptor and tool member according to any preceding Claim, in which the tool member forms part of a rotary tool.

18. An adaptor and tool member according to any of Claims 1 to 16, wherein the tool member is a holder adapted to receive a rotary tool.

Fig. 1

Fig. 2

Fig.3

123    101    162  160  121  119        141    125  119a  111  147

165

143    145    113  115  137  133    131  149

Fig.4

123  103  151  161  160  121        119  125  119a  147

101

165

143    145    115  137  135  170    133  153  149

2/3

0206612

Fig. 5

123 103 151 161 160 121 119 125 119a 153 147

101

137 131 133 135

145

143 164 163

Fig. 6

103 161 151 160 162 121 125 153 107

101

113 137 133 135 111 105

109

115 143 164 163 145

3/3

0206612